(19) Europäisches Patentamt
European Patent Office
Office européen des brevets

(11) **EP 4 722 019 A1**

(12) **EUROPEAN PATENT APPLICATION**
published in accordance with Art. 153(4) EPC

(43) Date of publication:
**08.04.2026 Bulletin 2026/15**

(21) Application number: **24869921.7**

(22) Date of filing: **28.06.2024**

(51) International Patent Classification (IPC):
**B60L 15/20** (2006.01)          **B60L 7/26** (2006.01)

(52) Cooperative Patent Classification (CPC):
**B60L 7/26; B60L 15/20;** Y02T 10/72

(86) International application number:
**PCT/CN2024/102193**

(87) International publication number:
**WO 2025/066362 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.09.2023 CN 202311244828**

(71) Applicant: **Great Wall Motor Company Limited
Baoding, Hebei 071000 (CN)**

(72) Inventor: **ZHANG, Qingzhu
Baoding, Hebei 071000 (CN)**

(74) Representative: **Michalski Hüttermann & Partner
Patentanwälte mbB
Kaistraße 16A
40221 Düsseldorf (DE)**

(54) **DRIVING CONTROL METHOD AND APPARATUS, ELECTRONIC DEVICE, AND VEHICLE**

(57)    The present application relates to a driving control method and apparatus, an electronic device, and a vehicle. When a deceleration control instruction is received, and it is determined that a slope angle of a road on which a vehicle is located is less than a preset slope angle threshold value, the vehicle is controlled to decelerate by using a rotational speed control mode of a motor. When the vehicle decelerates to stop, to prevent excessive energy consumption caused by the motor continuously generating braking force for controlling the vehicle to maintain a parking state, a motor braking force corresponding to the rotational speed control mode of the motor is switched to a mechanical braking force of a mechanical braking system, so that a magnitude of the mechanical braking force of the mechanical braking system can reach a magnitude of the motor braking force, and further the motor braking force may be replaced to ensure that the vehicle maintains the parking state on a road surface having a slope angle, thereby reducing energy consumption and preventing a problem of energy waste.

In response to receiving a deceleration control instruction, determining that a slope angle of a road on which a vehicle is located is less than a preset slope angle threshold value, and controlling the vehicle to decelerate by using a rotational speed control mode of a motor — 101

In response to the vehicle decelerating to stop, switching a motor braking force corresponding to the rotational speed control mode of the motor to a mechanical braking force of a mechanical braking system, to maintain a parking state of the vehicle — 102

FIG. 1A

**Description**

**CROSS-REFERENCE TO RELATED APPLICATIONS**

The present application claims priority to Chinese Patent Application No. 202311244828.7, filed with the Chinese Patent Office on September 25, 2023 and entitled "DRIVING CONTROL METHOD AND APPARATUS, ELECTRONIC DEVICE, AND VEHICLE", which is incorporated herein by reference in its entirety.

**TECHNICAL FIELD**

The present application relates to the field of vehicle control technologies, and in particular, to a driving control method and apparatus, an electronic device, and a vehicle.

**BACKGROUND**

In a process of parking on a road surface having a slope angle, motor braking may be used to implement a parking purpose.
Because conditions of a sloped road are relatively complicated, a vehicle needs to consume much energy when using motor braking to overcome the complicated conditions of the sloped road to implement smooth braking and maintain a parking state, thereby causing energy waste.

**SUMMARY**

In view of this, objectives of the present application are to propose a driving control method and apparatus, an electronic device, and a vehicle, to resolve a problem in a conventional technology that a vehicle needs to consume much energy to implement smooth braking and maintain a parking state when faced with complicated conditions of a sloped road, thereby causing energy waste.
Based on the foregoing objectives, a first aspect of the present application provides a driving control method, including:

in response to receiving a deceleration control instruction, determining that a slope angle of a road on which a vehicle is located is less than a preset slope angle threshold value, and controlling the vehicle to decelerate by using a rotational speed control mode of a motor; and
in response to the vehicle decelerating to stop, switching a motor braking force corresponding to the rotational speed control mode of the motor to a mechanical braking force of a mechanical braking system, to maintain a parking state of the vehicle.

Optionally, the switching the motor braking force corresponding to the rotational speed control mode of the motor to the mechanical braking force of the mechanical braking system, to maintain the parking state of the vehicle includes:

increasing the mechanical braking force of the mechanical braking system in a gradient manner according to a first preset braking force; and
in response to determining that the mechanical braking force is greater than or equal to the motor braking force, controlling the vehicle to maintain the parking state by using the mechanical braking force, and reducing the motor braking force in a gradient manner according to a second preset braking force until the motor braking force becomes zero.

Optionally, after the switching the motor braking force corresponding to the rotational speed control mode of the motor to the mechanical braking force of the mechanical braking system, to maintain the parking state of the vehicle, the method further includes:

in response to determining that an acceleration control instruction is received, determining a target driving force of the motor corresponding to the acceleration control instruction; and
in response to determining that the target driving force is less than a motor braking force used when the vehicle is controlled to decelerate to stop, controlling the vehicle to maintain the parking state, or
in response to determining that the target driving force is greater than or equal to a motor braking force used when the vehicle is controlled to decelerate to stop, acquiring a current driving force of the motor of the vehicle, increasing the current driving force, and reducing the mechanical braking force, to control the vehicle to accelerate.

Optionally, the increasing the current driving force and reducing the mechanical braking force, to control the vehicle to accelerate includes:

increasing the current driving force in a gradient manner according to a preset driving force; and
in response to determining that the increased current driving force is greater than or equal to the motor braking force used when the vehicle is controlled to decelerate to stop, reducing the mechanical braking force in a gradient manner according to a third preset braking force until the mechanical braking force becomes zero, and controlling the vehicle to accelerate.

Optionally, after the responding to receiving the deceleration control instruction, the method further includes: determining that the slope angle of the road on which the vehicle is located is greater than or equal to the preset slope angle threshold value, and controlling the vehicle to decelerate by using the mechanical braking system.

Optionally, the controlling the vehicle to decelerate by using the rotational speed control mode of the motor includes:

in response to determining that the motor of the vehicle is in a torque control mode, controlling the vehicle to decelerate, and acquiring a driving speed of the vehicle in a deceleration process;
in response to determining that the driving speed is less than or equal to a preset speed threshold, switching the torque control mode to the rotational speed control mode; and
in the rotational speed control mode, continuing to control the vehicle to decelerate by reducing a rotational speed of the motor of the vehicle.

Optionally, the continuing to control the vehicle to decelerate by reducing the rotational speed of the motor of the vehicle includes:

acquiring a wheel rolling radius of the vehicle, the reduced rotational speed of the motor, and a motor-to-wheel gear ratio of the vehicle;
performing speed conversion processing based on the wheel rolling radius, the gear ratio, and the reduced rotational speed of the motor, to obtain a target driving speed of the vehicle; and
acquiring a current driving speed of the vehicle, and adjusting the current driving speed to the target driving speed.

Optionally, the acquiring the motor-to-wheel gear ratio of the vehicle includes:

determining a rotational speed of an output shaft of the motor of the vehicle and a gear ratio of a drive shaft of a wheel of the vehicle; and
performing ratio processing on the rotational speed of the output shaft and the gear ratio of the drive shaft, to obtain the motor-to-wheel gear ratio of the vehicle.

Optionally, the method further includes:

in response to determining that the deceleration control instruction is received and the motor of the vehicle being in a torque control mode, switching the torque control mode to the rotational speed control mode;
in the rotational speed control mode, controlling a rotational speed of the motor of the vehicle to decrease;
adjusting a driving speed of the vehicle according to the rotational speed of the motor; and
acquiring the adjusted driving speed, and in response to determining that both the rotational speed of the motor and the adjusted driving speed are zero, exiting the rotational speed control mode.

Optionally, the method further includes:

in response to receiving the deceleration control instruction and the motor of the vehicle being in a torque control mode, switching the torque control mode to the rotational speed control mode;
in the rotational speed control mode, controlling a rotational speed of the motor of the vehicle to decrease;
in response to receiving an acceleration control instruction in a process in which the rotational speed of the motor of the vehicle decreases, switching the rotational speed control mode to the torque control mode; and
acquiring a target output torque of the motor corresponding to the acceleration control instruction, and a current output torque used when the rotational speed control mode is switched to the torque control mode, and increasing the current output torque to the target output torque, to control the vehicle to accelerate.

Optionally, a target pedal is disposed on the vehicle, the deceleration control instruction is generated by using the target pedal, and an acceleration control instruction is generated by using the target pedal.

Optionally, the slope angle of the road on which the vehicle is located is determined by using a following process:

detecting a distance between a chassis of the vehicle and a slope of the road on which the vehicle is located along a gravity direction, and a distance between the chassis of the vehicle and the slope of the road on which the vehicle is located along a direction perpendicular to the slope; and

determining the slope angle of the road on which the vehicle is located based on the distance along the gravity direction and the distance along the direction perpendicular to the slope.

Based on a same invention concept, a second aspect of the present application provides a driving control apparatus, including:

a deceleration control module, configured to: in response to receiving a deceleration control instruction, determine that a slope angle of a road on which a vehicle is located is less than a preset slope angle threshold value, and control the vehicle to decelerate by using a rotational speed control mode of a motor; and
a parking state maintaining module, configured to: in response to the vehicle decelerating to stop, switch a motor braking force corresponding to the rotational speed control mode of the motor to a mechanical braking force of a mechanical braking system, to maintain a parking state of the vehicle.

Based on a same invention concept, a third aspect of the present application provides an electronic device, including a memory, a processor, and a computer program stored in the memory and executable by the processor, where when the processor executes the computer program, the foregoing method is implemented.

Based on a same invention concept, a fourth aspect of the present application provides a vehicle, including the driving control apparatus according to the second aspect or the electronic device according to the third aspect.

It can be learned from the foregoing that, according to the driving control method and apparatus, the electronic device, and the vehicle provided in the present application, when a deceleration control instruction is received, and it is determined that a slope angle of a road on which a vehicle is located is less than a preset slope angle threshold value, the vehicle is controlled to decelerate by using a rotational speed control mode of a motor. When the slope angle of the road is relatively small, the vehicle can be accurately and smoothly controlled to decelerate by using the rotational speed control mode of the motor. When the vehicle decelerates to stop, to prevent excessive energy consumption caused by the motor continuously generating braking force for controlling the vehicle to maintain a parking state, a motor braking force corresponding to the rotational speed control mode of the motor is switched to a mechanical braking force of a mechanical braking system, so that a magnitude of the mechanical braking force of the mechanical braking system can reach a magnitude of the motor braking force, and further the motor braking force may be replaced to ensure that the vehicle maintains the parking state on a road surface having a slope angle, thereby reducing energy consumption and preventing a problem of energy waste.

## BRIEF DESCRIPTION OF THE DRAWINGS

FIG. 1A is a flowchart of a driving control method according to an embodiment of the present application;
FIG. 1B is a schematic diagram of substeps of Step 102;
FIG. 1C is a schematic diagram of substeps of Step 1021;
FIG. 1D is a schematic diagram of substeps of Step 1022;
FIG. 1E is a flowchart of vehicle acceleration control according to an embodiment of the present application;
FIG. 1F is a schematic diagram of substeps of Step A3;
FIG. 1G is a schematic diagram of substeps of Step 101;
FIG. 1H is a schematic diagram of substeps of Step 1013;
FIG. 1I is a schematic diagram of substeps of Step 10131;
FIG. 1J is a flowchart of parking control according to an embodiment of the present application;
FIG. 1K is a flowchart of vehicle speed control according to an embodiment of the present application;
FIG. 1L is a flowchart of determining a slope angle of a road on which a vehicle is located according to an embodiment of the present application;
FIG. 2 is a schematic diagram of a driving control procedure according to an embodiment of the present application;
FIG. 3 is a schematic structural diagram of a driving control apparatus according to an embodiment of the present application; and

FIG. 4 is a schematic diagram of an electronic device according to an embodiment of the present application.

## DETAILED DESCRIPTION OF THE EMBODIMENTS

It may be understood that, before technical solutions in embodiments of the present application are used, a user is appropriately notified of a type, a usage range, a usage scenario, and the like of involved personal information, and authorization of the user is obtained.

For example, in response to receiving an active request from the user, prompt information is transmitted to the user, to explicitly prompt the user that an operation requested to be executed by the user needs to acquire and use personal information of the user. Therefore, the user can independently select, according to the prompt information, whether to provide personal information to software or hardware such as an electronic device, an application program, a server, or a storage medium that executes operations in the technical solutions of the present application.

In an optional but not limited implementation, a manner of transmitting the prompt information to the user in response to receiving the active request of the user may be, for example, a pop-up window, in which the prompt information may be displayed in a form of text. In addition, the pop-up window may further carry a selection control for the user to select "Agree" or "Disagree" to provide the personal information to the electronic device.

It may be understood that the foregoing process of notifying the user and acquiring the authorization of the user is merely exemplary, and imposes no limitation on implementations of the present application. Another manner that meets related laws and regulations may also be applied to the implementations of the present application.

In a related technology, in a process of parking on a road surface having a slope angle, usually motor braking needs to be used to implement a parking purpose. Because conditions of a sloped road are relatively complicated, a vehicle needs to consume much energy when using motor braking to overcome the complicated conditions of the sloped road to implement smooth braking and maintain a parking state, thereby causing energy waste.

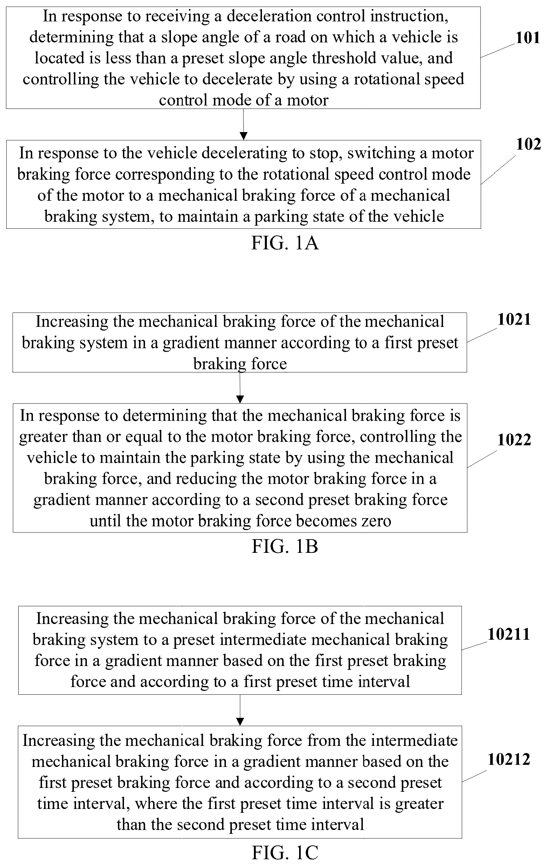

A driving control method proposed in embodiments is applied to a vehicle end. The vehicle is controlled to decelerate by using a rotational speed control mode of a motor. When a slope angle of a road is relatively small, the vehicle can be accurately and smoothly controlled to decelerate by using the rotational speed control mode of the motor. When the vehicle decelerates to stop, to prevent excessive energy consumption caused by the motor continuously generating braking force for controlling the vehicle to maintain a parking state, a motor braking force corresponding to the rotational speed control mode of the motor is switched to a mechanical braking force of a mechanical braking system, so that a magnitude of the mechanical braking force of the mechanical braking system can reach the motor braking force, and further the motor braking force may be replaced to ensure that the vehicle maintains the parking state on a road surface having a slope angle, thereby reducing energy consumption and preventing a problem of energy waste. As shown in FIG. 1A, the driving control method includes:

Step 101: In response to receiving a deceleration control instruction, determining that a slope angle of a road on which a vehicle is located is less than a preset slope angle threshold value, and controlling the vehicle to decelerate by using a rotational speed control mode of a motor.

In this step, the deceleration control instruction may be generated when a user depresses a brake pedal, or may be a voice deceleration instruction, or may be generated when a user clicks a deceleration control button, or may be generated when a user releases a target pedal.

In addition, an acceleration control instruction can be further generated when the user depresses the target pedal. In this way, both an acceleration requirement and a braking requirement of the user can be met by using a same target pedal, so that the user does not need to repeatedly switch between operations of an accelerator pedal and a brake pedal, thereby facilitating driving and improving driving comfort.

When the deceleration control instruction is received, and it is determined that the slope angle of the road on which the vehicle is located is less than the preset slope angle threshold value, the vehicle is controlled to decelerate by using the rotational speed control mode of the motor. In this manner, the following problems can be prevented: a failure to implement quick braking due to repeated adjustment required when the vehicle is controlled to decelerate in a torque control mode; and instability of the vehicle caused by an abrupt change in a torque of the motor due to the repeated adjustment. Therefore, in the present application, the vehicle is controlled to decelerate by using the rotational speed control mode of the motor, thereby achieving effects of implementing quick braking and maintaining stability of the vehicle.

Detecting the slope angle of the road on which the vehicle is located may be: collecting an image of the road in front of the vehicle by using a camera disposed on the vehicle. The image of the road includes a target object. The target object in the image of the road is detected, to obtain an object bounding box, an optical axis offset value of the camera is determined based on an optical axis of the camera mounted on the vehicle and the object bounding box, and a value of a relative height between a position in which the target object is located and a position in which the vehicle is located is determined based on the optical axis offset value. Then, a relative distance between the target object and the vehicle is measured by using a LiDAR device mounted on the vehicle, and the slope angle of the road on which the vehicle is located is obtained by performing ratio processing by using the value of the relative height between the position in which the target object is located and the position in which the vehicle is located and the relative distance between the target object and the vehicle. By using the relative distance between the target object and the vehicle and the relative height value, the determined slope angle of the road on which the vehicle is located is more accurate.

Alternatively, to detect the slope angle of the road on which the vehicle is located, a first distance detector disposed on a chassis of the vehicle is used to detect a distance d1 between the chassis of the vehicle and the slope along a gravity direction, and a second distance detector disposed on the chassis of the vehicle is used to detect a distance d2 between the chassis of the vehicle and the slope along a direction perpendicular to the slope. The slope angle of the road on which the vehicle is located is obtained based on the distance d1 and the distance d2 and by using a preset road slope angle function, thereby implementing quick determining of the slope angle of the road. The road slope angle function is as follows:

$$\theta = \cos(d2/d1)$$

where $\theta$ represents the slope angle of the road on which the vehicle is located, d1 represents the distance between the chassis of the vehicle and the slope along the gravity direction, and d2 represents the distance between the chassis of the vehicle and the slope along the direction perpendicular to the slope.

In addition, if the slope angle of the road on which the vehicle is located is greater than or equal to the preset slope angle threshold value, the vehicle may be controlled to decelerate by using a mechanical braking system, to implement parking of the vehicle, thereby preventing a failure to stop the vehicle when the vehicle is controlled to decelerate by using the rotational speed control mode of the motor due to an excessively large slope angle of the road.

The mechanical braking system may be a brake pedal, an AUTO HOLD, or an Electronic Stability Program (ESP).

The rotational speed control mode represents a motor working mode that uses a rotational speed output by the motor as a control object for adjustment.

Step 102: In response to the vehicle decelerating to stop, switching a motor braking force corresponding to the rotational speed control mode of the motor to a mechanical braking force of a mechanical braking system, to maintain a parking state of the vehicle.

In this step, when the vehicle decelerates to stop, to prevent excessive energy consumption caused by the motor continuously generating braking force for controlling the vehicle to maintain a parking state, a motor braking force corresponding to the rotational speed control mode of the motor is switched to a mechanical braking force of a mechanical braking system, so that a magnitude of the mechanical braking force of the mechanical braking system can reach a magnitude of the motor braking force, and further the motor braking force may be replaced to ensure that the vehicle maintains the parking state on a road surface having a slope angle.

In the foregoing solution, when a deceleration control instruction is received, and it is determined that a slope angle of a road on which a vehicle is located is less than a preset slope angle threshold value, the vehicle is controlled to decelerate by using a rotational speed control mode of a motor. When the slope angle of the road is relatively small, the vehicle can be accurately and smoothly controlled to decelerate by using the rotational speed control mode of the motor. When the vehicle decelerates to stop, to prevent excessive energy consumption caused by the motor continuously generating braking force for controlling the vehicle to maintain a parking state, a motor braking force corresponding to the rotational speed control mode of the motor is switched to a mechanical braking force of a mechanical braking system, so that a magnitude of the mechanical braking force of the mechanical braking system can reach a magnitude of the motor braking force, and further the motor braking force may be replaced to ensure that the vehicle maintains the parking state on a road surface having a slope angle, thereby reducing energy consumption and preventing a problem of energy waste.

In some embodiments, as shown in FIG. 1B, in Step 102, the switching the motor braking force corresponding to the rotational speed control mode of the motor to the mechanical braking force of the mechanical braking system, to maintain the parking state of the vehicle includes:

Step 1021: Increasing the mechanical braking force of the mechanical braking system in a gradient manner according to a first preset braking force.
Step 1022: In response to determining that the mechanical braking force is greater than or equal to the motor braking force, controlling the vehicle to maintain the parking state by using the mechanical braking force, and reducing the motor braking force in a gradient manner according to a second preset braking force until the motor braking force becomes zero.

In the foregoing solutions, a first preset braking force may be set according to a specific case, which is not specifically limited herein. For example, the first preset braking force is 2N, and a change in which the mechanical braking force increases in a gradient manner is expressed as: 2N, 4N, 6N, 8N, 10N, ..., 2nN, which means increasing by 2N each time.

When the mechanical braking force is greater than or equal to the motor braking force, the vehicle can be controlled, by using the mechanical braking force of the mechanical braking system, to maintain the parking state on a road having a relatively small slope angle, and the motor braking force is replaced with the mechanical braking force to ensure that the vehicle can maintain the parking state on a road having a relatively small slope angle. In this case, the motor braking force is reduced in a gradient manner according to the second preset braking force, thereby preventing the vehicle from rolling back.

A second preset braking force may be set according to a specific case, which is not specifically limited herein. For example, the second preset braking force is 4N, and a change in which the motor braking force decreases in a gradient manner is expressed as: 16N, 12N, 8N, 4N, 0N, which means decreasing by 4N each time.

The motor braking force can be reduced in a gradient manner by increasing the mechanical braking force of the mechanical braking system in a gradient manner, thereby preventing the vehicle from shaking due to an excessively rapid change in the mechanical braking force and the motor braking force.

In some embodiments, as shown in FIG. 1C, Step 1021 includes:

Step 10211: Increasing the mechanical braking force of the mechanical braking system to a preset intermediate mechanical braking force in a gradient manner based on the first preset braking force and according to a first preset time interval.

Step 10212: Increasing the mechanical braking force from the intermediate mechanical braking force in a gradient manner based on the first preset braking force and according to a second preset time interval, where the first preset time interval is greater than the second preset time interval.

In the foregoing solutions, the first preset time interval may be set according to a specific case, which is not specifically limited herein, and the intermediate mechanical braking force may be set according to a specific case, which is not specifically limited herein. For example, the first preset braking force is 2N, and the first preset time interval is 10 seconds. In this case, the mechanical braking force is increased by 2N every 10 seconds until the mechanical braking force reaches the intermediate mechanical braking force.

The second preset time interval may be set according to a specific case, which is not specifically limited herein. For example, the first preset time interval is 5 seconds. In this case, the mechanical braking force is increased by 2N every 5 seconds on a basis of the intermediate mechanical braking force.

A speed of increasing the mechanical braking force is limited by using the first preset time interval, to prevent the vehicle from shaking due to an excessively rapid change in the mechanical braking force. When the mechanical braking force is increased to the intermediate mechanical braking force, a speed of increasing the mechanical braking force is increased by using the second preset time interval, thereby reducing an adjustment time in which the motor braking force is replaced by the mechanical braking force to control the vehicle to maintain the parking state.

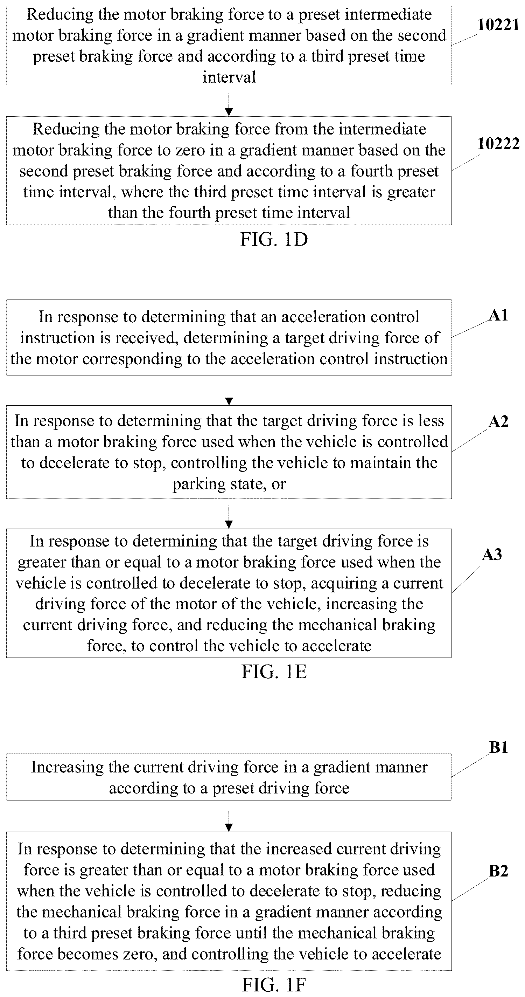

In some embodiments, as shown in FIG. 1D, in Step 1022, the reducing the motor braking force in a gradient manner according to the second preset braking force until the motor braking force becomes zero includes:

Step 10221: Reducing the motor braking force to a preset intermediate motor braking force in a gradient manner based on the second preset braking force and according to a third preset time interval.

Step 10222: Reducing the motor braking force from the intermediate motor braking force to zero in a gradient manner based on the second preset braking force and according to a fourth preset time interval, where the third preset time interval is greater than the fourth preset time interval.

In the foregoing solutions, the third preset time interval may be set according to a specific case, which is not specifically limited herein, and the intermediate motor braking force may be set according to a specific case, which is not specifically limited herein. For example, the second preset braking force is 4N, and the third preset time interval is 6 seconds. In this case, the mechanical braking force is reduced by 4N every 6 seconds until the mechanical braking force reaches the intermediate braking force.

The fourth preset time interval may be set according to a specific case, which is not specifically limited herein. For example, the fourth preset time interval is 3 seconds. In this case, the motor braking force is reduced by 4N every 3 seconds on a basis of the intermediate motor braking force until the motor braking force becomes zero.

A speed of reducing the motor braking force is limited by using the third preset time interval, to prevent the vehicle from shaking due to an excessively rapid change in the motor braking force. When the motor braking force is reduced to the intermediate motor braking force, a speed of reducing the motor braking force is increased by using the fourth preset time interval, thereby shortening a time in which the motor braking force is reduced to zero, and reducing energy consumption.

In some embodiments, as shown in FIG. 1E, after Step 102, the method further includes:

> Step A1: In response to determining that an acceleration control instruction is received, determining a target driving force of the motor corresponding to the acceleration control instruction.
> Step A2: In response to determining that the target driving force is less than a motor braking force used when the vehicle is controlled to decelerate to stop, controlling the vehicle to maintain the parking state, or
> Step A3: In response to determining that the target driving force is greater than or equal to a motor braking force used when the vehicle is controlled to decelerate to stop, acquiring a current driving force of the motor of the vehicle, increasing the current driving force, and reducing the mechanical braking force, to control the vehicle to accelerate.

In the foregoing solutions, the acceleration control instruction may be generated when a user depresses an accelerator pedal, or may be a voice acceleration instruction, or may be generated when a user clicks an acceleration control button, or may be generated when a user depresses a target pedal.

In addition, a deceleration control instruction can be further generated when the user releases the target pedal. In this way, both an acceleration requirement and a braking requirement of the user can be met by using a same target pedal, so that the user does not need to repeatedly switch between operations of an acceleration pedal and a brake pedal, thereby facilitating driving and improving driving comfort.

The current driving force represents an actual driving force of the motor of the vehicle, and the target driving force represents a required driving force of the motor under an operation corresponding to the acceleration control instruction.

When the vehicle maintains the parking state on a road having a relatively small slope angle, a braking force that can enable the vehicle to maintain the parking state, that is, the mechanical braking force, exists on the vehicle. Therefore, if the acceleration control instruction is received, to accelerate the vehicle, the actual driving force of the motor needs to be greater than or equal to the motor braking force used when the vehicle is controlled to decelerate to stop. The current driving force of the motor of the vehicle is acquired by using a driving force sensor, where the current driving force represents the actual driving force. The current driving force is increased, and the mechanical braking force is reduced, to control the vehicle to accelerate.

In addition, the target driving force corresponding to the acceleration control instruction is determined. For example, the corresponding target driving force may be determined based on opening of the target pedal.

In some embodiments, as shown in FIG. 1F, in Step A3, the increasing the current driving force, and reducing the mechanical braking force, to control the vehicle to accelerate includes:

> Step B1: Increasing the current driving force in a gradient manner according to a preset driving force.
> Step B2: In response to determining that the increased current driving force is greater than or equal to a motor braking force used when the vehicle is controlled to decelerate to stop, reducing the mechanical braking force in a gradient manner according to a third preset braking force until the mechanical braking force becomes zero, and controlling the vehicle to accelerate.

In the foregoing solutions, the current driving force is increased in a gradient manner according to the preset driving force. If the current driving force is increased to the motor braking force used when the vehicle is controlled to decelerate to stop, the mechanical braking force is reduced in a gradient manner according to the third preset braking force until the mechanical braking force becomes zero. In this case, the vehicle may, according to the acceleration control instruction, gradually increase the driving force by using a driving force corresponding to the acceleration control instruction as a target, to control the vehicle to accelerate. The third preset braking force may be set according to a specific case, which is not specifically limited herein.

In some embodiments, in Step 101, after the responding to receiving the deceleration control instruction, the method further includes:
determining that the slope angle of the road on which the vehicle is located is greater than or equal to the preset slope angle threshold value, and controlling the vehicle to decelerate by using the mechanical braking system.

In the foregoing solutions, if the slope angle of the road on which the vehicle is located is greater than or equal to the preset slope angle threshold value, the vehicle may be controlled to decelerate by using a mechanical braking system, to implement parking of the vehicle, thereby preventing a failure to stop the vehicle when the vehicle is controlled to decelerate by using the rotational speed control mode of the motor due to an excessively large slope angle of the road.

The mechanical braking system may be a brake pedal, an AUTO HOLD, or an Electronic Stability Program (ESP).

The rotational speed control mode represents a motor working mode that uses a rotational speed output by the motor as a control object for adjustment.

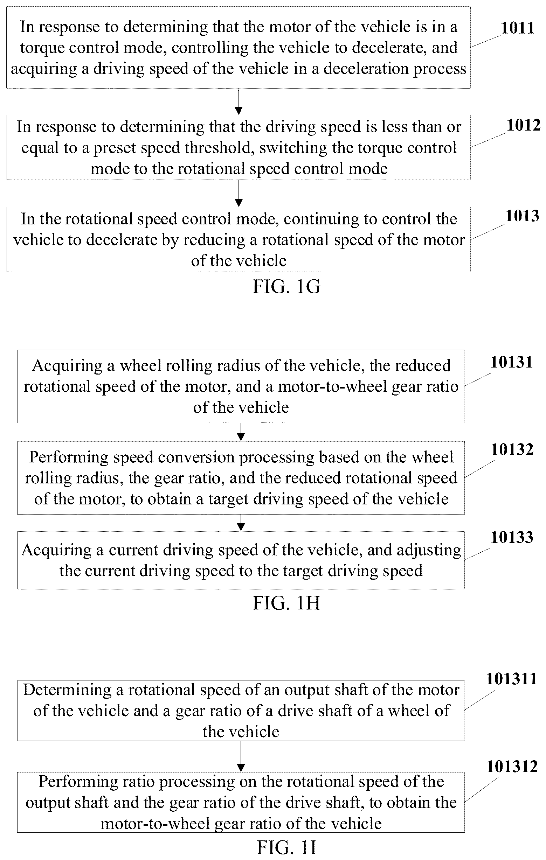

In some embodiments, as shown in FIG. 1G, in Step 101, the controlling the vehicle to decelerate by using the rotational speed control mode of the motor includes:

Step 1011: In response to determining that the motor of the vehicle is in a torque control mode, controlling the vehicle to decelerate, and acquiring a driving speed of the vehicle in a deceleration process.

Step 1012: In response to determining that the driving speed is less than or equal to a preset speed threshold, switching the torque control mode to the rotational speed control mode.

Step 1013: In the rotational speed control mode, continuing to control the vehicle to decelerate by reducing a rotational speed of the motor of the vehicle.

In the foregoing solutions, the torque control mode represents a motor working mode that uses a torque output by the motor as a control object for adjustment, and the driving speed of the vehicle in the deceleration process is acquired by using a vehicle speed sensor.

When the vehicle travels downhill along a road having a relatively small slope angle, the motor generates a reverse torque by using a negative sequence voltage, to implement braking of the hybrid vehicle, thereby implementing deceleration of the vehicle.

When the vehicle travels uphill along a road having a relatively small slope angle, the motor generates a positive torque by using a positive sequence voltage, to implement braking of the hybrid vehicle, thereby implementing deceleration of the vehicle.

In addition, in the deceleration process of the vehicle, regenerative braking is further performed, to convert mechanical energy of the vehicle in the deceleration process into electric energy for storage. If the acceleration control instruction is received, the regenerative braking is stopped. The acceleration control instruction may be generated when a user depresses an accelerator pedal, or may be a voice acceleration control instruction, or may be generated when a user clicks an acceleration control button, or may be generated when a user depresses a target pedal.

When the driving speed of the vehicle in the deceleration process is reduced to the preset speed threshold or is less than the preset speed threshold, it indicates that the driving speed of the vehicle is reduced to a degree. In this case, the torque control mode is switched to the rotational speed control mode, thereby implementing adjustment of the rotational speed of the motor in the rotational speed control mode.

By limiting the driving speed and entering the rotational speed control mode again when the driving speed is reduced to a degree, energy recovery of the vehicle can be implemented, thereby saving battery power of the vehicle.

There is a correspondence between the rotational speed of the motor and the driving speed of the vehicle. The corresponding driving speed can be determined by using the rotational speed of the motor. Therefore, in the rotational speed control mode, as the rotational speed of the motor decreases, the driving speed of the vehicle also decreases, and the driving speed can be accurately controlled by reducing the rotational speed of the motor.

In some embodiments, as shown in FIG. 1H, in Step 1013, the continuing to control the vehicle to decelerate by reducing the rotational speed of the motor of the vehicle includes:

Step 10131: Acquiring a wheel rolling radius of the vehicle, the reduced rotational speed of the motor, and a motor-to-wheel gear ratio of the vehicle.

Step 10132: Performing speed conversion processing based on the wheel rolling radius, the gear ratio, and the reduced rotational speed of the motor, to obtain a target driving speed of the vehicle.

Step 10133: Acquiring a current driving speed of the vehicle, and adjusting the current driving speed to the target driving speed.

In the foregoing solutions, the wheel rolling radius of the vehicle is acquired by using a laser rangefinder.

There is a correlation between the rotational speed of the motor and the driving speed. Specifically, when the rotational speed of the motor increases, the driving speed increases accordingly. On the contrary, when the rotational speed of the motor decreases, the driving speed decreases accordingly. This is because the rotational speed of the motor determines power and a torque output by the motor, thereby affecting a motion state of the wheel. In addition, the driving speed is also affected by the wheel rolling radius. A larger wheel rolling radius indicates a higher circumferential speed of the wheel and a higher driving speed. In addition to the wheel rolling radius, factors such as a gear ratio also affect a change in the driving speed. Therefore, a plurality of factors need to be comprehensively considered. The wheel rolling radius, the gear ratio, and a real-time rotational speed of the motor are comprehensively considered to ensure accuracy of the driving speed.

The target driving speed represents a driving speed corresponding to the reduced rotational speed of the motor, and the current driving speed represents an actual driving speed of the vehicle. After the target driving speed is determined, the current driving speed of the vehicle is adjusted to the target driving speed, thereby implementing precise adjustment of the driving speed by using the rotational speed of the motor.

This relationship may be represented by using the following formula:

$$Driving\ speed\ =\ 2*3.05*Rotational\ speed\ of\ the\ motor*Wheel\ rolling\ radius*$$
$$Gear\ ratio/1000.$$

It is determined that a weight parameter of the rotational speed of the motor is 2*3.05, a weight parameter of the wheel rolling radius is 1, a weight parameter of the gear ratio is 1/1000, and the gear ratio represents a ratio of a rotational speed of an output shaft of the motor to a rotational speed of the wheel. Herein, the gear ratio is preferably 60/11.7.

In some embodiments, as shown in FIG. 1I, in Step 10131, the acquiring the motor-to-wheel gear ratio of the vehicle includes:

Step 101311: Determining a rotational speed of an output shaft of the motor of the vehicle and a gear ratio of a drive shaft of a wheel of the vehicle.

Step 101312: Performing ratio processing on the rotational speed of the output shaft and the gear ratio of the drive shaft, to obtain the motor-to-wheel gear ratio of the vehicle.

In the foregoing solutions, the gear ratio refers to a ratio of the rotational speed of the output shaft of the motor to a rotational speed of the drive shaft. The rotational speed of the drive shaft and the rotational speed of the output shaft of the motor may be measured by using a measuring instrument. Generally, the measurement may be implemented by installing a rotational speed sensor or a speed measuring instrument.

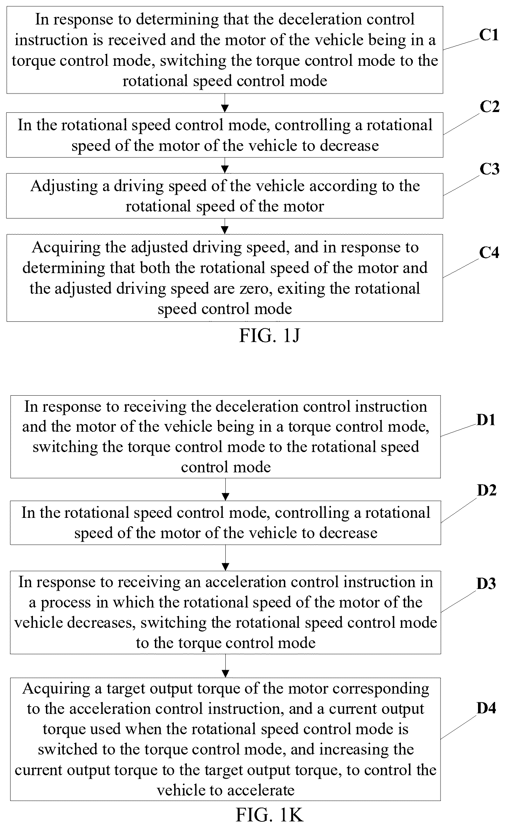

In some embodiments, as shown in FIG. 1J, the method further includes:

Step C1: In response to determining that the deceleration control instruction is received and the motor of the vehicle being in a torque control mode, switching the torque control mode to the rotational speed control mode.

Step C2: In the rotational speed control mode, controlling a rotational speed of the motor of the vehicle to decrease.

Step C3: Adjusting a driving speed of the vehicle according to the rotational speed of the motor.

Step C4: Acquiring the adjusted driving speed, and in response to determining that both the rotational speed of the motor and the adjusted driving speed are zero, exiting the rotational speed control mode.

In the foregoing solutions, in the rotational speed control mode, the rotational speed of the motor of the vehicle may be controlled to decrease by reducing a power supply frequency of the motor, or the rotational speed of the motor of the vehicle may be controlled to decrease by reducing an electric current of the motor. The adjusted driving speed is acquired by using a vehicle speed sensor.

When the deceleration control instruction is received and the motor of the vehicle is in the torque control mode, a control mode of the motor is switched. The torque control mode is switched to the rotational speed control mode, and the driving speed of the vehicle is reduced by reducing the rotational speed of the motor in the rotational speed control mode, thereby implementing a braking purpose. In this manner, the following problems can be prevented: a failure to implement quick braking due to repeated adjustment required when the driving speed of the vehicle is reduced in the torque control mode; and instability of the vehicle caused by an abrupt change in a torque of the motor due to the repeated adjustment.

In addition, effects of implementing quick braking and maintaining stability of the vehicle can be achieved. By reducing both the rotational speed of the motor and the driving speed to zero, the rotational speed control mode is exited, and the vehicle does not shake during braking, thereby preventing instability of the vehicle and ensuring driving experience of a user.

In some embodiments, as shown in FIG. 1K, the method further includes:

Step D1: In response to receiving the deceleration control instruction and the motor of the vehicle being in a torque control mode, switching the torque control mode to the rotational speed control mode.

Step D2: In the rotational speed control mode, controlling a rotational speed of the motor of the vehicle to decrease.

Step D3: In response to receiving an acceleration control instruction in a process in which the rotational speed of the motor of the vehicle decreases, switching the rotational speed control mode to the torque control mode.

Step D4: Acquiring a target output torque of the motor corresponding to the acceleration control instruction, and a current output torque used when the rotational speed control mode is switched to the torque control mode, and increasing the current output torque to the target output torque, to control the vehicle to accelerate.

In the foregoing solutions, the target output torque of the motor corresponding to the acceleration control instruction and the current output torque used when the rotational speed control mode is switched to the torque control mode are acquired by using a force sensor.

When the deceleration control instruction is received, and the motor of the vehicle is in the torque control mode, the torque control mode is switched to the rotational speed control mode. In the rotational speed control mode, the rotational speed of the motor of the vehicle is controlled to decrease. When the acceleration control instruction is received in the process in which the rotational speed of the motor of the vehicle decreases, to drive the vehicle, the rotational speed control mode needs to be switched to the torque control mode. In a related technology, an output torque of the motor increases from zero during acceleration, which leads to an abrupt change in the output torque before and after the acceleration. Therefore, by acquiring the target output torque of the motor corresponding to the acceleration control instruction and the current output torque used when the rotational speed control mode is switched to the torque control mode, the output torque of the motor in an acceleration process is directly based on the current output torque, and the current output torque is increased to the target output torque, which does not need to be increased from zero. In this way, continuity of the output torque of the motor before and after the acceleration is ensured, and an abrupt change in the output torque before and after the acceleration is prevented, thereby preventing jerks of the vehicle and ensuring driving experience of a user.

In some embodiments, a target pedal is disposed on the vehicle, the deceleration control instruction is generated by using the target pedal, and an acceleration control instruction is generated by using the target pedal.

In the foregoing solutions, a user releases the target pedal to generate the deceleration control instruction, and the user depresses the target pedal to generate the acceleration control instruction, to control the vehicle to accelerate. In this way, both an acceleration requirement and a braking requirement of the user can be met by using a same target pedal, so that the user does not need to repeatedly switch between operations of an acceleration pedal and a brake pedal, thereby facilitating driving and improving driving comfort.

In addition, a brake pedal and an accelerator pedal are further disposed on the vehicle. When the vehicle encounters an emergency, the user may still depress the brake pedal to complete braking.

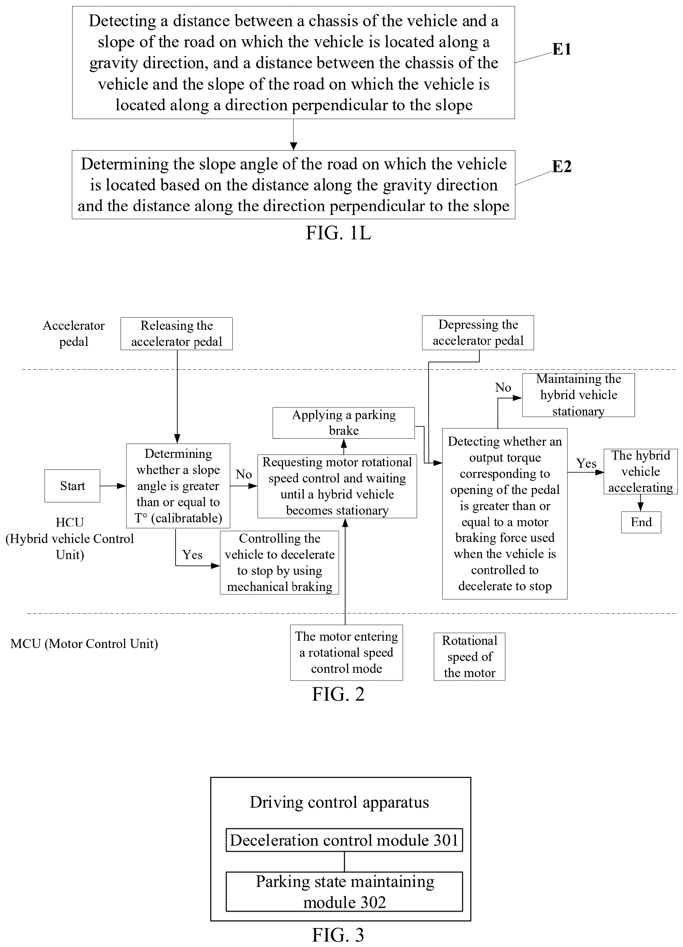

In some embodiments, as shown in FIG. 1L, in Step 101, the slope angle of the road on which the vehicle is located is determined by using the following process:

Step E1: Detecting a distance between a chassis of the vehicle and a slope of the road on which the vehicle is located along a gravity direction, and a distance between the chassis of the vehicle and the slope of the road on which the vehicle is located along a direction perpendicular to the slope.

Step E2: Determining the slope angle of the road on which the vehicle is located based on the distance along the gravity direction and the distance along the direction perpendicular to the slope.

In the foregoing solutions, to detect the slope angle of the road on which the vehicle is located, a first distance detector disposed on the chassis of the vehicle is used to detect the distance d1 between the chassis of the vehicle and the slope along the gravity direction, and a second distance detector disposed on the chassis of the vehicle is used to detect the distance d2 between the chassis of the vehicle and the slope along the direction perpendicular to the slope. The slope angle of the road on which the vehicle is located is obtained based on the distance d1 and the distance d2 and by using a preset road slope angle function, thereby implementing quick determining of the slope angle of the road. The road slope angle function is as follows:

$$\theta = \cos(d2/d1)$$

where $\theta$ represents the slope angle of the road on which the vehicle is located, d1 represents the distance between the chassis of the vehicle and the slope along the gravity direction, and d2 represents the distance between the chassis of the vehicle and the slope along the direction perpendicular to the slope.

An application scenario corresponding to the driving control method in the foregoing embodiments is specifically described based on a same invention concept. As shown in FIG. 2, details are as follows.

When a user releases an accelerator pedal (that is, a deceleration control instruction is received), a Hybrid vehicle Control Unit (HCU) determines whether a slope angle (that is, a slope angle of a road on which a vehicle is located) is greater than or equal to T° (that is, a preset slope angle threshold value). If the slope angle is greater than or equal to T°, the vehicle is controlled to decelerate to stop by using mechanical braking. If the slope angle is less than T°, the HCU requests motor rotational speed and waits until the hybrid vehicle becomes stationary (that is, the vehicle decelerates to stop). In this process, after receiving the request, a Motor Control Unit (MCU) controls the motor to enter a rotational speed control mode, and adjusts the rotational speed of the motor, to control the vehicle to stop.

After requesting the motor rotational speed control and waiting until the hybrid vehicle becomes stationary, the HCU applies a parking brake (that is, switches a motor braking force corresponding to the rotational speed control mode of the motor to a mechanical braking force of a mechanical braking system, to maintain a parking state of the vehicle), and reduces the motor braking force corresponding to the rotational speed control mode of the motor until the motor braking force becomes zero.

When the accelerator pedal is depressed (that is, an acceleration control instruction is received), the HCU detects whether an output torque (a target driving force corresponding to the acceleration control instruction) corresponding to opening of the pedal is greater than or equal to a motor braking force used when the vehicle is controlled to decelerate to stop. If the output torque is greater than or equal to the motor braking force, the HCU acquires a current driving force of the motor of the vehicle, and increases the current driving force. If the increased current driving force is greater than or equal to the motor braking force used when the vehicle is controlled to decelerate to stop, the HCU reduces the mechanical braking force until the mechanical braking force becomes zero, thereby accelerating the hybrid vehicle. If the increased current driving force is less than the motor braking force used when the vehicle is controlled to decelerate to stop, the hybrid vehicle remains stationary.

It should be noted that the method in the embodiments of the present application may be executed by a single device, for example, a computer or a server. The method in the embodiments may also be applied to a distributed scenario and implemented by a plurality of devices in cooperation. In this distributed scenario, one of the plurality of devices may execute only one or more steps in the method in embodiments of the present application. The plurality of devices interact with each other to complete the method in the embodiments of the present application.

It should be noted that the foregoing describes some embodiments of the present application, and other embodiments are within the scope of the appended claims. In some cases, actions or steps described in the claims may be executed in a sequence different from that in the foregoing embodiments, and expected results can still be implemented. In addition, a process depicted in the accompanying drawings does not necessarily require a particular or consecutive sequence shown to achieve the expected results. In some implementations, multi-tasking and parallel processing are also viable and advantageous.

Based on a same invention concept and corresponding to the method in any one of the foregoing embodiments, the present application further provides a driving control apparatus.

Referring to FIG. 3, the driving control apparatus includes:

a deceleration control module 301, configured to: in response to receiving a deceleration control instruction, determine that a slope angle of a road on which a vehicle is located is less than a preset slope angle threshold value, and control the vehicle to decelerate by using a rotational speed control mode of a motor; and
a parking state maintaining module 302, configured to: in response to the vehicle decelerating to stop, switch a motor braking force corresponding to the rotational speed control mode of the motor to a mechanical braking force of a mechanical braking system, to maintain a parking state of the vehicle.

In some embodiments, the parking state maintaining module 302 includes:

a mechanical braking force increasing unit, configured to increase the mechanical braking force of the mechanical braking system in a gradient manner according to a first preset braking force; and
a motor braking force reducing unit, configured to: in response to determining that the mechanical braking force is greater than or equal to the motor braking force, control the vehicle to maintain the parking state by using the mechanical braking force, and reduce the motor braking force in a gradient manner according to a second preset braking force until the motor braking force becomes zero.

In some embodiments, the driving control apparatus further includes an acceleration module. After the motor braking force corresponding to the rotational speed control mode of the motor is switched to the mechanical braking force of the mechanical braking system, to maintain the parking state of the vehicle, the acceleration module includes:

a target driving force determining unit, configured to: in response to determining that an acceleration control instruction is received, determine a target driving force of the motor corresponding to the acceleration control instruction; and
a parking state maintaining unit, configured to: in response to determining that the target driving force is less than a motor braking force used when the vehicle is controlled to decelerate to stop, control the vehicle to maintain the parking state, or
a mechanical braking force reducing unit, configured to: in response to determining that the target driving force is greater than or equal to a motor braking force used when the vehicle is controlled to decelerate to stop, acquire a current driving force of the motor of the vehicle, increase the current driving force, and reduce the mechanical braking force, to control the vehicle to accelerate.

In some embodiments, the mechanical braking force reducing unit is specifically configured to:

increase the current driving force in a gradient manner according to a preset driving force; and

in response to determining that the increased current driving force is greater than or equal to the motor braking force used when the vehicle is controlled to decelerate to stop, reduce the mechanical braking force in a gradient manner according to a third preset braking force until the mechanical braking force becomes zero, and control the vehicle to accelerate.

In some embodiments, the driving control apparatus further includes a mechanical braking and deceleration module. After the responding to receiving the deceleration control instruction, the mechanical braking and deceleration module is specifically configured to:
determine that the slope angle of the road on which the vehicle is located is greater than or equal to the preset slope angle threshold value, and control the vehicle to decelerate by using the mechanical braking system.
In some embodiments, the deceleration control module 301 includes:

a deceleration unit, configured to: in response to determining that the motor of the vehicle is in a torque control mode, control the vehicle to decelerate, and acquire a driving speed of the vehicle in a deceleration process;
a rotational speed control mode switching unit, configured to: in response to determining that the driving speed is less than or equal to a preset speed threshold, switch the torque control mode to the rotational speed control mode; and
a motor rotational speed reducing unit, configured to: in the rotational speed control mode, continue to control the vehicle to decelerate by reducing a rotational speed of the motor of the vehicle.

In some embodiments, the motor rotational speed reducing unit includes:

an acquiring subunit, configured to acquire a wheel rolling radius of the vehicle, the reduced rotational speed of the motor, and a motor-to-wheel gear ratio of the vehicle; and
a speed conversion subunit, configured to perform speed conversion processing based on the wheel rolling radius, the gear ratio, and the reduced rotational speed of the motor, to obtain a target driving speed of the vehicle; and acquire a current driving speed of the vehicle, and adjust the current driving speed to the target driving speed.

In some embodiments, the acquiring subunit is specifically configured to:

determine a rotational speed of an output shaft of the motor of the vehicle and a gear ratio of a drive shaft of a wheel of the vehicle; and
perform ratio processing on the rotational speed of the output shaft and the gear ratio of the drive shaft, to obtain the motor-to-wheel gear ratio of the vehicle.

In some embodiments, the driving control apparatus further includes a deceleration module. The deceleration module is specifically configured to:

in response to determining that the deceleration control instruction is received and the motor of the vehicle being in a torque control mode, switch the torque control mode to the rotational speed control mode;
in the rotational speed control mode, control a rotational speed of the motor of the vehicle to decrease;
adjust a driving speed of the vehicle according to the rotational speed of the motor; and
acquire the adjusted driving speed, and in response to determining that both the rotational speed of the motor and the adjusted driving speed are zero, exit the rotational speed control mode.

In some embodiments, the driving control apparatus further includes a speed control module. The speed control module is specifically configured to:

in response to receiving the deceleration control instruction and the motor of the vehicle being in a torque control mode, switch the torque control mode to the rotational speed control mode;
in the rotational speed control mode, control a rotational speed of the motor of the vehicle to decrease;
in response to receiving an acceleration control instruction in a process in which the rotational speed of the motor of the vehicle decreases, switch the rotational speed control mode to the torque control mode; and

acquire a target output torque of the motor corresponding to the acceleration control instruction, and a current output torque used when the rotational speed control mode is switched to the torque control mode, and increase the current output torque to the target output torque, to control the vehicle to accelerate.

In some embodiments, a target pedal is disposed on the vehicle, the deceleration control instruction is generated by using the target pedal, and an acceleration control instruction is generated by using the target pedal.

In some embodiments, the driving control apparatus further includes a road slope angle determining module. The road slope angle determining module is specifically configured to:

detect a distance between a chassis of the vehicle and a slope of the road on which the vehicle is located along a gravity direction, and a distance between the chassis of the vehicle and the slope of the road on which the vehicle is located along a direction perpendicular to the slope; and

determine the slope angle of the road on which the vehicle is located based on the distance along the gravity direction and the distance along the direction perpendicular to the slope.

For ease of description, the foregoing apparatus is functionally divided into modules, each described separately. Certainly, in implementing the present application, functions of the modules may be implemented in a same piece or a plurality of pieces of software and/or hardware.

The apparatus in the foregoing embodiments is configured to implement the corresponding driving control method in any one of the foregoing embodiments, and has beneficial effects of the corresponding method embodiments. Details are not described herein again.

Based on a same invention concept and corresponding to the method in any one of the foregoing embodiments, the present application further provides an electronic device, including a memory, a processor, and a computer program stored in the memory and runnable on the processor. When the processor executes the program, the driving control method according to any one of the foregoing embodiments is implemented.

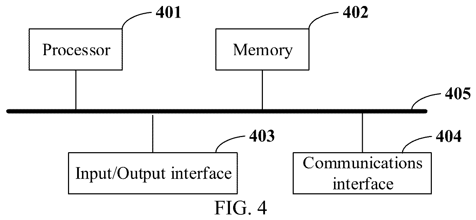

FIG. 4 is a schematic diagram of a more specific hardware structure of an electronic device according to an embodiment. The device may include a processor 401, a memory 402, an input/output interface 403, a communications interface 404, and a bus 405. The processor 401, the memory 402, the input/output interface 403, and the communications interface 404 implement an internal communication connection between each other by using the bus 405.

The processor 401 may be implemented by using a general-purpose CPU (Central Processing Unit), a microprocessor, an Application-Specific Integrated Circuit (ASIC), one or more integrated circuits, or the like, and is configured to execute a related program, to implement technical solutions provided in the embodiments of the specification.

The memory 402 may be implemented in a form of a ROM (Read Only Memory), a RAM (Random Access Memory), a static storage device, a dynamic storage device, or the like. The memory 402 may store an operating system and another application program. When technical solutions provided in the embodiments of the specification are implemented by using software or firmware, related program code is stored in the memory 402 and is invoked and executed by the processor 401.

The input/output interface 403 is configured to connect to an input/output module, to implement information input and output. The input/output module may be configured as a component in the device (not shown in FIG. 4), or may be connected externally to the device to provide corresponding functions. The input device may include a keyboard, a mouse, a touchscreen, a microphone, various sensors, and the like, and the output device may include a display, a speaker, a vibrator, an indicator, and the like.

The communications interface 404 is configured to connect to a communications module (not shown in FIG. 4), to implement communication and interaction between the device and another device. The communications module may implement communication in a wired manner (for example, a USB or a network cable), or may implement communication in a wireless manner (for example, a mobile network, Wi-Fi, or Bluetooth).

The bus 405 includes a channel for transmitting information between the components (for example, the processor 401, the memory 402, the input/output interface 403, and the communications interface 404) of the device.

It should be noted that, although only the processor 401, the memory 402, the input/output interface 403, the communications interface 404, and the bus 405 are shown in the foregoing device, in a specific implementation process, the device may further include another component required for implementing normal running. In addition, a person skilled in the art may understand that the foregoing device may include only components required for implementing solutions in the embodiments of the specification, and does not need to include all the components shown in FIG. 4.

The electronic device in the foregoing embodiments is configured to implement the corresponding driving control method in any one of the foregoing embodiments, and has beneficial effects of the corresponding method embodiment.

Details are not described herein again.

Based on a same invention concept and corresponding to the method in any one of the foregoing embodiments, the present application further provides a computer-readable storage medium. The computer-readable storage medium stores a computer instruction, and the computer instruction is used to enable a computer to execute the driving control method according to any one of the foregoing embodiments.

The computer-readable medium in the embodiments includes a permanent, non-permanent, removable, or non-removable medium that can implement information storage by using any method or technology. The information may be a computer-readable instruction, a data structure, a module of a program, or other data. Examples of a computer storage medium include but are not limited to: a Phase-change Random Access Memory (PRAM), a Static Random Access Memory (SRAM), a Dynamic Random Access Memory (DRAM), another type of Random Access Memory (RAM), a Read-Only Memory (ROM), an Electrically Erasable Programmable Read-Only Memory (EEPROM), a flash memory or another memory technology, a Compact Disc Read-Only Memory (CD-ROM), a Digital Versatile Disc (DVD) or another optical storage, a magnetic cassette tape, a magnetic tape and disk storage or another magnetic storage device, or any other non-transmission medium, which may be configured to store information accessible to a computing device.

The computer instruction stored in the storage medium in the foregoing embodiments is used to enable the computer to execute the driving control method according to any one of the foregoing embodiments, and has beneficial effects of the corresponding method embodiments. Details are not described herein again.

Based on a same invention concept, the embodiments provide a vehicle corresponding to the driving control apparatus, the electronic device, or the storage medium according to any one of the foregoing embodiments. The driving control apparatus, the electronic device, or the storage medium that can implement the driving control method according to any one of the foregoing embodiments is installed on the vehicle.

A person of ordinary skill in the art should understand that discussion of any one of the foregoing embodiments is merely exemplary, and is not intended to imply that the scope of the present application (including the claims) is limited to these examples. Under the idea of the present application, the technical features in the foregoing embodiments or different embodiments may be combined, steps may be implemented in any sequence, and there are many other changes in different aspects of the foregoing embodiments of the present application. For brevity, these are not described in detail.

In addition, for ease of description and discussion, and in order not to obscure the embodiments of the present application, a well-known power or ground connection to an Integrated Circuit (IC) chip and another component may be shown or may not be shown in the provided accompanying drawings. In addition, apparatuses may be shown in a form of block diagrams, which avoids obscuring the embodiments of the present application, and also takes into account the following fact: details on implementations of these apparatuses shown in block diagrams are highly dependent on a platform that is about to implement the embodiments of the present application (that is, the details shall be fully within the understanding scope of a person skilled in the art). In a case that specific details (for example, circuits) are illustrated to describe exemplary embodiments of the present application, it is evident to a person skilled in the art that the embodiments of the present application may be implemented without these specific details or in a case that these specific details change. Therefore, these descriptions shall be considered illustrative rather than restrictive.

Although the present application has been described with reference to the specific embodiments of the present application, according to the foregoing descriptions, many substitutions, modifications, and variations of these embodiments are evident to a person of ordinary skill in the art. For example, other memory architectures (for example, a Dynamic RAM (DRAM)) may use the discussed embodiments.

The embodiments of the present application are intended to cover all such substitutions, modifications, and variations falling within the broad scope of the appended claims. Therefore, any omission, modification, equivalent replacement, or improvement made within the spirit and principles of the embodiments of the present application shall be included in the protection scope of the present application.

**Claims**

1. A driving control method, comprising:

   in response to receiving a deceleration control instruction, determining that a slope angle of a road on which a vehicle is located is less than a preset slope angle threshold value, and controlling the vehicle to decelerate by using a rotational speed control mode of a motor; and
   in response to the vehicle decelerating to stop, switching a motor braking force corresponding to the rotational speed control mode of the motor to a mechanical braking force of a mechanical braking system, to maintain a parking state of the vehicle.

2. The method according to claim 1, wherein the switching the motor braking force corresponding to the rotational speed control mode of the motor to the mechanical braking force of the mechanical braking system, to maintain the parking state of the vehicle comprises:

increasing the mechanical braking force of the mechanical braking system in a gradient manner according to a first preset braking force; and

in response to determining that the mechanical braking force is greater than or equal to the motor braking force, controlling the vehicle to maintain the parking state by using the mechanical braking force, and reducing the motor braking force in a gradient manner according to a second preset braking force until the motor braking force becomes zero.

3. The method according to claim 1, wherein after the switching the motor braking force corresponding to the rotational speed control mode of the motor to the mechanical braking force of the mechanical braking system, to maintain the parking state of the vehicle, the method further comprises:

in response to determining that an acceleration control instruction is received, determining a target driving force of the motor corresponding to the acceleration control instruction; and

in response to determining that the target driving force is less than a motor braking force used when the vehicle is controlled to decelerate to stop, controlling the vehicle to maintain the parking state, or

in response to determining that the target driving force is greater than or equal to a motor braking force used when the vehicle is controlled to decelerate to stop, acquiring a current driving force of the motor of the vehicle, increasing the current driving force, and reducing the mechanical braking force, to control the vehicle to accelerate.

4. The method according to claim 3, wherein the increasing the current driving force and reducing the mechanical braking force, to control the vehicle to accelerate comprises:

increasing the current driving force in a gradient manner according to a preset driving force; and

in response to determining that the increased current driving force is greater than or equal to the motor braking force used when the vehicle is controlled to decelerate to stop, reducing the mechanical braking force in a gradient manner according to a third preset braking force until the mechanical braking force becomes zero, and controlling the vehicle to accelerate.

5. The method according to claim 1, wherein after the responding to receiving the deceleration control instruction, the method further comprises:
determining that the slope angle of the road on which the vehicle is located is greater than or equal to the preset slope angle threshold value, and controlling the vehicle to decelerate by using the mechanical braking system.

6. The method according to claim 1, wherein the controlling the vehicle to decelerate by using the rotational speed control mode of the motor comprises:

in response to determining that the motor of the vehicle is in a torque control mode, controlling the vehicle to decelerate, and acquiring a driving speed of the vehicle in a deceleration process;

in response to determining that the driving speed is less than or equal to a preset speed threshold, switching the torque control mode to the rotational speed control mode; and

in the rotational speed control mode, continuing to control the vehicle to decelerate by reducing a rotational speed of the motor of the vehicle.

7. The method according to claim 6, wherein the continuing to control the vehicle to decelerate by reducing the rotational speed of the motor of the vehicle comprises:

acquiring a wheel rolling radius of the vehicle, the reduced rotational speed of the motor, and a motor-to-wheel gear ratio of the vehicle;

performing speed conversion processing based on the wheel rolling radius, the gear ratio, and the reduced rotational speed of the motor, to obtain a target driving speed of the vehicle; and

acquiring a current driving speed of the vehicle, and adjusting the current driving speed to the target driving speed.

8. The method according to claim 7, wherein the acquiring the motor-to-wheel gear ratio of the vehicle comprises:

determining a rotational speed of an output shaft of the motor of the vehicle and a gear ratio of a drive shaft of a wheel of the vehicle; and

performing ratio processing on the rotational speed of the output shaft and the gear ratio of the drive shaft, to obtain the motor-to-wheel gear ratio of the vehicle.

9. The method according to claim 1, wherein the method further comprises:

in response to determining that the deceleration control instruction is received and the motor of the vehicle being in a torque control mode, switching the torque control mode to the rotational speed control mode;
in the rotational speed control mode, controlling a rotational speed of the motor of the vehicle to decrease;
adjusting a driving speed of the vehicle according to the rotational speed of the motor; and
acquiring the adjusted driving speed, and in response to determining that both the rotational speed of the motor and the adjusted driving speed are zero, exiting the rotational speed control mode.

10. The method according to claim 1, wherein the method further comprises:

in response to receiving the deceleration control instruction and the motor of the vehicle being in a torque control mode, switching the torque control mode to the rotational speed control mode;
in the rotational speed control mode, controlling a rotational speed of the motor of the vehicle to decrease;
in response to receiving an acceleration control instruction in a process in which the rotational speed of the motor of the vehicle decreases, switching the rotational speed control mode to the torque control mode; and
acquiring a target output torque of the motor corresponding to the acceleration control instruction, and a current output torque used when the rotational speed control mode is switched to the torque control mode, and increasing the current output torque to the target output torque, to control the vehicle to accelerate.

11. The method according to claim 1, wherein a target pedal is disposed on the vehicle, the deceleration control instruction is generated by using the target pedal, and an acceleration control instruction is generated by using the target pedal.

12. The method according to claim 1, wherein the slope angle of the road on which the vehicle is located is determined by using a following process:

detecting a distance between a chassis of the vehicle and a slope of the road on which the vehicle is located along a gravity direction, and a distance between the chassis of the vehicle and the slope of the road on which the vehicle is located along a direction perpendicular to the slope; and
determining the slope angle of the road on which the vehicle is located based on the distance along the gravity direction and the distance along the direction perpendicular to the slope.

13. A driving control apparatus, comprising a processor, wherein the processor is configured to execute following program modules stored in a memory:

a deceleration control module, configured to: in response to receiving a deceleration control instruction, determine that a slope angle of a road on which a vehicle is located is less than a preset slope angle threshold value, and control the vehicle to decelerate by using a rotational speed control mode of a motor; and
a parking state maintaining module, configured to: in response to the vehicle decelerating to stop, switch a motor braking force corresponding to the rotational speed control mode of the motor to a mechanical braking force of a mechanical braking system, to maintain a parking state of the vehicle.

14. An electronic device, comprising a memory, a processor, and a computer program stored in the memory and runnable on the processor, wherein when the processor executes the computer program, the method according to any one of claims 1 to 12 is implemented.

15. A vehicle, comprising the driving control apparatus according to claim 13 or the electronic device according to claim 14.

In response to receiving a deceleration control instruction, determining that a slope angle of a road on which a vehicle is located is less than a preset slope angle threshold value, and controlling the vehicle to decelerate by using a rotational speed control mode of a motor — 101

In response to the vehicle decelerating to stop, switching a motor braking force corresponding to the rotational speed control mode of the motor to a mechanical braking force of a mechanical braking system, to maintain a parking state of the vehicle — 102

FIG. 1A

Increasing the mechanical braking force of the mechanical braking system in a gradient manner according to a first preset braking force — 1021

In response to determining that the mechanical braking force is greater than or equal to the motor braking force, controlling the vehicle to maintain the parking state by using the mechanical braking force, and reducing the motor braking force in a gradient manner according to a second preset braking force until the motor braking force becomes zero — 1022

FIG. 1B

Increasing the mechanical braking force of the mechanical braking system to a preset intermediate mechanical braking force in a gradient manner based on the first preset braking force and according to a first preset time interval — 10211

Increasing the mechanical braking force from the intermediate mechanical braking force in a gradient manner based on the first preset braking force and according to a second preset time interval, where the first preset time interval is greater than the second preset time interval — 10212

FIG. 1C

Reducing the motor braking force to a preset intermediate motor braking force in a gradient manner based on the second preset braking force and according to a third preset time interval _10221_

Reducing the motor braking force from the intermediate motor braking force to zero in a gradient manner based on the second preset braking force and according to a fourth preset time interval, where the third preset time interval is greater than the fourth preset time interval _10222_

FIG. 1D

In response to determining that an acceleration control instruction is received, determining a target driving force of the motor corresponding to the acceleration control instruction _A1_

In response to determining that the target driving force is less than a motor braking force used when the vehicle is controlled to decelerate to stop, controlling the vehicle to maintain the parking state, or _A2_

In response to determining that the target driving force is greater than or equal to a motor braking force used when the vehicle is controlled to decelerate to stop, acquiring a current driving force of the motor of the vehicle, increasing the current driving force, and reducing the mechanical braking force, to control the vehicle to accelerate _A3_

FIG. 1E

Increasing the current driving force in a gradient manner according to a preset driving force _B1_

In response to determining that the increased current driving force is greater than or equal to a motor braking force used when the vehicle is controlled to decelerate to stop, reducing the mechanical braking force in a gradient manner according to a third preset braking force until the mechanical braking force becomes zero, and controlling the vehicle to accelerate _B2_

FIG. 1F

In response to determining that the motor of the vehicle is in a torque control mode, controlling the vehicle to decelerate, and acquiring a driving speed of the vehicle in a deceleration process   1011

In response to determining that the driving speed is less than or equal to a preset speed threshold, switching the torque control mode to the rotational speed control mode   1012

In the rotational speed control mode, continuing to control the vehicle to decelerate by reducing a rotational speed of the motor of the vehicle   1013

FIG. 1G

Acquiring a wheel rolling radius of the vehicle, the reduced rotational speed of the motor, and a motor-to-wheel gear ratio of the vehicle   10131

Performing speed conversion processing based on the wheel rolling radius, the gear ratio, and the reduced rotational speed of the motor, to obtain a target driving speed of the vehicle   10132

Acquiring a current driving speed of the vehicle, and adjusting the current driving speed to the target driving speed   10133

FIG. 1H

Determining a rotational speed of an output shaft of the motor of the vehicle and a gear ratio of a drive shaft of a wheel of the vehicle   101311

Performing ratio processing on the rotational speed of the output shaft and the gear ratio of the drive shaft, to obtain the motor-to-wheel gear ratio of the vehicle   101312

FIG. 1I

| In response to determining that the deceleration control instruction is received and the motor of the vehicle being in a torque control mode, switching the torque control mode to the rotational speed control mode | C1 |

| In the rotational speed control mode, controlling a rotational speed of the motor of the vehicle to decrease | C2 |

| Adjusting a driving speed of the vehicle according to the rotational speed of the motor | C3 |

| Acquiring the adjusted driving speed, and in response to determining that both the rotational speed of the motor and the adjusted driving speed are zero, exiting the rotational speed control mode | C4 |

FIG. 1J

| In response to receiving the deceleration control instruction and the motor of the vehicle being in a torque control mode, switching the torque control mode to the rotational speed control mode | D1 |

| In the rotational speed control mode, controlling a rotational speed of the motor of the vehicle to decrease | D2 |

| In response to receiving an acceleration control instruction in a process in which the rotational speed of the motor of the vehicle decreases, switching the rotational speed control mode to the torque control mode | D3 |

| Acquiring a target output torque of the motor corresponding to the acceleration control instruction, and a current output torque used when the rotational speed control mode is switched to the torque control mode, and increasing the current output torque to the target output torque, to control the vehicle to accelerate | D4 |

FIG. 1K

Detecting a distance between a chassis of the vehicle and a slope of the road on which the vehicle is located along a gravity direction, and a distance between the chassis of the vehicle and the slope of the road on which the vehicle is located along a direction perpendicular to the slope — E1

Determining the slope angle of the road on which the vehicle is located based on the distance along the gravity direction and the distance along the direction perpendicular to the slope — E2

FIG. 1L

Accelerator pedal

Releasing the accelerator pedal

Depressing the accelerator pedal

No → Maintaining the hybrid vehicle stationary

Applying a parking brake

Start → Determining whether a slope angle is greater than or equal to T° (calibratable)

No → Requesting motor rotational speed control and waiting until a hybrid vehicle becomes stationary

Detecting whether an output torque corresponding to opening of the pedal is greater than or equal to a motor braking force used when the vehicle is controlled to decelerate to stop

Yes → The hybrid vehicle accelerating

HCU (Hybrid vehicle Control Unit)

Yes → Controlling the vehicle to decelerate to stop by using mechanical braking

End

MCU (Motor Control Unit)

The motor entering a rotational speed control mode

Rotational speed of the motor

FIG. 2

Driving control apparatus

Deceleration control module 301

Parking state maintaining module 302

FIG. 3

Processor 401

Memory 402

405

Input/Output interface 403

Communications interface 404

FIG. 4

## INTERNATIONAL SEARCH REPORT

| International application No. |
| --- |
| **PCT/CN2024/102193** |

| A. | CLASSIFICATION OF SUBJECT MATTER |
| --- | --- |

B60L15/20(2006.01)i; B60L7/26(2006.01)i

According to International Patent Classification (IPC) or to both national classification and IPC

| B. | FIELDS SEARCHED |
| --- | --- |

Minimum documentation searched (classification system followed by classification symbols)

IPC: B60L

Documentation searched other than minimum documentation to the extent that such documents are included in the fields searched

Electronic data base consulted during the international search (name of data base and, where practicable, search terms used)

CNABS, CNKI, CNTXT, ENTXT, VEN: 坡度, 制动, 电机, 力矩, 减速, 驱动, 切换, gradient, brak+, motor, torque, deceleration, driv+, switch+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117227505 A (GREAT WALL MOTOR CO., LTD.) 15 December 2023 (2023-12-15) description, paragraphs 39-183, and figures 1-4 | 1-15 |
| A | CN 113665374 A (WEICHAI POWER CO., LTD.; WEIFANG WEICHAI POWER TECHNOLOGY CO., LTD.) 19 November 2021 (2021-11-19) description, paragraphs 61-167, and figures 1-8 | 1-15 |
| A | CN 110234533 A (NISSAN MOTOR CO., LTD.) 13 September 2019 (2019-09-13) entire document | 1-15 |
| A | CN 113635885 A (GUANGZHOU XIAOPENG MOTORS TECHNOLOGY CO., LTD.) 12 November 2021 (2021-11-12) entire document | 1-15 |
| A | CN 116061939 A (DONGFENG MOTOR GROUP CO., LTD.) 05 May 2023 (2023-05-05) entire document | 1-15 |
| A | JP 2016088333 A (CLARION CO., LTD.) 23 May 2016 (2016-05-23) entire document | 1-15 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 August 2024** | **23 August 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/102193** |

**C.    DOCUMENTS CONSIDERED TO BE RELEVANT**

| Category* | Citation of document, with indication, where appropriate, of the relevant passages | Relevant to claim No. |
|---|---|---|
| A | US 2018134292 A1 (FORD GLOBAL TECHNOLOGIES, LLC.) 17 May 2018 (2018-05-17) entire document | 1-15 |
| A | US 2021024057 A1 (BEIJING TUSEN WEILAI TECHNOLOGY CO., LTD.) 28 January 2021 (2021-01-28) entire document | 1-15 |
| A | US 2023060311 A1 (GREAT WALL MOTOR CO., LTD.) 02 March 2023 (2023-03-02) entire document | 1-15 |

Form PCT/ISA/210 (second sheet) (July 2022)

## INTERNATIONAL SEARCH REPORT
### Information on patent family members

| International application No. |
|---|
| **PCT/CN2024/102193** |

| Patent document cited in search report | | | Publication date (day/month/year) | Patent family member(s) | | | Publication date (day/month/year) |
|---|---|---|---|---|---|---|---|
| CN | 117227505 | A | 15 December 2023 | None | | | |
| CN | 113665374 | A | 19 November 2021 | None | | | |
| CN | 110234533 | A | 13 September 2019 | US | 2020164885 | A1 | 28 May 2020 |
| | | | | US | 10858010 | B2 | 08 December 2020 |
| | | | | JP | 6787410 | B2 | 25 November 2020 |
| | | | | EP | 3575132 | A1 | 04 December 2019 |
| | | | | WO | 2018138780 | A1 | 02 August 2018 |
| | | | | RU | 2723661 | C1 | 17 June 2020 |
| | | | | MX | 2019008370 | A | 06 September 2019 |
| | | | | KR | 20190092596 | A | 07 August 2019 |
| | | | | KR | 102121872 | B1 | 11 June 2020 |
| | | | | BR | 112019015179 | A2 | 24 March 2020 |
| | | | | CA | 3059420 | A1 | 02 August 2018 |
| CN | 113635885 | A | 12 November 2021 | None | | | |
| CN | 116061939 | A | 05 May 2023 | None | | | |
| JP | 2016088333 | A | 23 May 2016 | None | | | |
| US | 2018134292 | A1 | 17 May 2018 | DE | 102016222172 | B3 | 17 May 2018 |
| | | | | US | 10906541 | B2 | 02 February 2021 |
| US | 2021024057 | A1 | 28 January 2021 | AU | 2018416898 | A1 | 22 October 2020 |
| | | | | WO | 2019184264 | A1 | 03 October 2019 |
| | | | | US | 11603092 | B2 | 14 March 2023 |
| | | | | EP | 3778325 | A1 | 17 February 2021 |
| | | | | US | 2023211775 | A1 | 06 July 2023 |
| US | 2023060311 | A1 | 02 March 2023 | EP | 4063982 | A1 | 28 September 2022 |
| | | | | WO | 2021139710 | A1 | 15 July 2021 |
| | | | | US | 12043259 | B2 | 23 July 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202311244828